(19) Europäisches Patentamt
European Patent Office
Office européen des brevets

(11) Veröffentlichungsnummer: **0 201 901**
**A2**

(12) # EUROPÄISCHE PATENTANMELDUNG

(21) Anmeldenummer: **86106429.3**

(22) Anmeldetag: **12.05.86**

(51) Int. Cl.[4]: **B 29 D 12/02**
B 05 D 7/02, B 05 D 1/24

(30) Priorität: **14.05.85 DE 3517453**

(43) Veröffentlichungstag der Anmeldung:
**20.11.86 Patentblatt 86/47**

(84) Benannte Vertragsstaaten:
**AT BE CH DE FR GB IT LI LU NL SE**

(71) Anmelder: **Simro AG**
**Juststrasse 26**
**CH-8706 Meilen(CH)**

(72) Erfinder: **Czech, Günther**
**Heinrich-Hertz-Strasse 4/1**
**D-7024 Filderstadt 4(DE)**

(72) Erfinder: **Fessel, Theodor**
**Ahornstrasse 5**
**D-8800 Ansbach(DE)**

(74) Vertreter: **Struif, Bernward, Dipl.-Chem. Dr. et al,**
**Patentanwaltsbüro Tiedtke, Bühling, Kinne Grupe,**
**Pellmann, Grams, Struif Bavariaring 4**
**D-8000 München 2(DE)**

(54) **Mit Kunststoff überzogener Gegenstand sowie Verfahren zu dessen Herstellung.**

(57) Es wird ein mit Kunststoff überzogener Gegenstand beschrieben, wobei der Gegenstand aus hochschmelzendem Kunststoff besteht, auf den ein Überzug aus Kunststoff-pulver aufgeschmolzen ist.

EP 0 201 901 A2

Croydon Printing Company Ltd.

**PELLMANN - GRAMS - STRUIF**

Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams
Dipl.-Chem. Dr. B. Struif

**Bavariaring 4, Postfach 20 24 03**
**8000 München 2**
Tel.: 0 89 - 53 96 53
Telex: 5-24 845 tipat
Telecopier: 0 89 - 537377
cable: Germaniapatent München



1

EP 5610
12. Mai 1986

SIMRO AG
8706 Meilen, Schweiz

Mit Kunststoff überzogener
Gegenstand sowie Verfahren zu dessen Herstellung

Die Erfindung betrifft einen mit Kunststoff überzogenen Gegenstand, insbesondere eine Brillenfassung oder ein Teil davon sowie ein Verfahren zur Herstellung des Überzugs.

Es ist generell bekannt, Metallteile nach dem sogenannten Wirbelsinterverfahren zu beschichten. Hierzu wird das heiße Metallteil in ein Wirbelsinterbad eingetaucht, indem sich aufgewirbelte Harzpulverteilchen befinden. Das Pulver, das mit dem heißen Metallteil in Berührung kommt, schmilzt und bildet einen Film. Mit dem bekannten Wirbelsinterverfahren lassen sich gleichmäßige Überzüge auf Metallteile aufbringen.

Aus der DE-OS 32 00 858 ist ein Verfahren zum Aufbringen eines Farbüberzugs auf Brillengestelle bekannt, auf die

ein Überzug aus harzhaltigem Kunststoffpulver aufgebracht wurde. Das Metall-Brillengestell wird hierzu vorgewärmt und auf das vorerwärmte Gestell wird Harzpulver elektrostatisch aufgesprüht. Das mit Harzpulver überzogene Gestell wird dann gebrannt, wobei das Pulver zu einem Überzug verschmilzt. Anschließend wird das mit dem Kunststoff überzogene Gestell in eine heiße Farblösung eingetaucht und nach Entnahme aus dem Farbbad aufgewärmt, wobei die Farbe tief in den Kunststoffüberzug eindiffundiert. Durch die bekannte Verfahrensweise wird ein besonders abriebfester und im wesentlich gegenüber Lösungsmitteln beständiger Farbauftrag erzielt. Das bekannte Verfahren läßt sich jedoch nur mit Brillengestellen aus Metall durchführen, da nur Metalle bei den hier angewandten Brenntemperaturen von 170 bis 250°C ausreichend formstabil sind.

In der Patentanmeldung P 34 29 075.5 sind Brillenfassungen und Teile davon aus Polyetherimid oder Polyethersulfon beschrieben. Solche Brillenfassungen zeichnen sich durch eine hohe Steifigkeit, ein geringes spezifisches Gewicht, eine ausgezeichnete Wärmeformbeständigkeit und ein hohes Federrückstellvermögen aus, das denjenigen von Brillengestellmetallen ähnlich ist.

Es ist auch bekannt, Brillenfassung aus Kunststoff mit einer Beschichtungszusammensetzung zu überziehen, die organische Lösungsmittel enthält. Der Auftrag aus organischen Lösungsmitteln führt nicht immer zu einer gleichmäßigen Schichtdicke. Außerdem bringt die Verwendung organischer Lösungsmittel Umweltprobleme mit sich.

Der vorliegenden Erfindung liegt die Aufgabe zugrunde, einen mit Kunststoff überzogenen Gegenstand, insbesondere eine Brillenfassung oder einen Teil davon, sowie ein Verfahren

zu dessen Herstellung zur Verfügung zu stellen, der mit einem gleichmäßigen Überzug in besonders materialschonenderweise ohne Verwendung von organischen Lösungsmitteln aufgebracht werden kann, wobei der Überzug eine gute Abriebfestigkeit und Haftung aufweist und in gewünschter Weise eingefärbt werden kann.

Diese Aufgabe ist mit den kennzeichnenden Merkmalen der Patentansprüche 1 bzw. 16 gelöst.

Die Anwendung des Wirbelsinterverfahrens auf Gegenstände aus hochschmelzendem Kunststoff liefert gegenüber bekannten Beschichtungstechniken ganz erhebliche Vorteile. Das Wirbelsinterverfahren ist besonders materialschonend und ergibt stets die gewünschte gleiche Schichtdicke. Da das Verfahren ohne Lösungsmittel auskommt, ist es besonders umweltfreundlich und sauber. Erfindungsgemäß wurde gefunden, daß das auf den Kunststoffgegenstand aufgeschmolzenen Kunststoffpulver eine gute Abriebfestigkeit und Haftung haben. Durch Anwendung von Farbpigmenten können auch gewünschte Farbtöne beim Wirbelsinterverfahren auf den Kunststoffgegenstand aufgetragen werden, ohne daß ein separater Farbauftrag notwendig ist. Auf diese Weise lassen sich in einem Schritt die gewünschten optischen Effekte erreichen. Außerdem hat dieses Verfahren den Vorteil, daß physiologisch bedenkliche Kunststoffe mit einer physiologisch unbedenklichen Schicht überzogen werden.

Die vorliegende Erfindung wird nun unter Bezugnahme auf Brillenfassungen und Teilen davon näher erläutert.

Der hochschmelzende Kunststoff für die Brillenfassung oder das Teil davon sollte einen Schmelzpunkt bzw. einen Erweichungspunkt von mindestens 150°C, vorzugsweise 170°C aufweisen. Zweckmäßigerweise beträgt die Schmelz- bzw. Erweichungstemperatur des hochschmelzenden Kunststoffes 150 bis 240°C, vorzugsweise 170 bis 230°C. Als hochschmelzende Kunststoffe werden vorzugsweise ein Polyetherimid, Polyethersulfon, Polysulfon, Polyphenylensulfid, Polyphenylenoxid, Polyimid, Polyamidimid, Polyarylsulfon, Polyetheretherketon, Polyamid, Polyester, Epoxid oder Polyurethan verwendet.

Ein bevorzugter Werkstoff für die Brillenfassung bzw. das Teil davon ist ein Polyetherimid mit folgender wiederholenden Einheit:

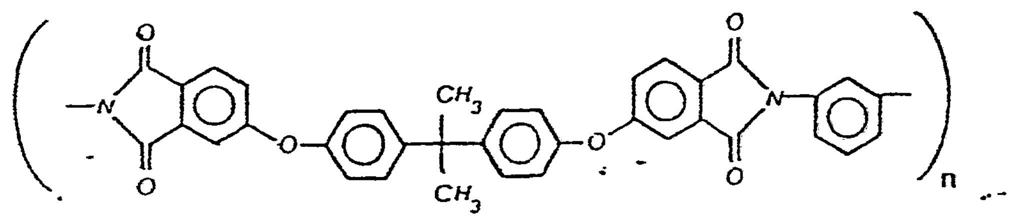

Dieses Polyetherimid ist ein stark gelblich, bernsteinfarbender, transparenter thermoplastischer Kunststoff, der vorzugsweise folgende Eigenschaften aufweist:

eine Zugfestigkeit, gemessen nach DIN 53455 von 90 bis 140 N/mm², eine Dehnung bis zum Bruch, gemessen nach DIN 53455 von 40 bis 80 %, einen Biegemodul, gemessen nach DIN 53457 von 2500 bis 5000 N/mm², eine IZOD-Kerbschlagzähigkeit, gemessen nach ASTM D 256 von 30 bis 90 J/m, eine Glastemperatur von 210 bis 230°C, eine Wärmeformbeständigkeit DTUL, gemessen nach ASTM D 648 von 190 bis 210°C und eine Dichte, gemessen nach DIN 53479 von 1,10 bis 1,50 Mg/m³.

Ein besonders bevorzugter Werkstoff ist ein Polyetherimid mit folgenden Eigenschaften:

eine Zugfestigkeit, gemessen nach DIN 53455 von 100 bis 110 N/mm², eine Dehnung bis zum Bruch, gemessen nach DIN 53455 von 55 bis 65 %, einen Biegemodul, gemessen nach DIN 53457 von 3000 bis 3500 N/mm², eine IZOD Kerbschlagzähigkeit, gemessen nach ASTM D 256 von 40 bis 60 J/m, eine Glastemperatur von 215 bis 220°C, eine Wärmeformbeständigkeit DTUL, gemessen nach ASTM D 648 von 195 bis 205°C und eine Dichte, gemessen nach DIN 53479 von 1,25 bis 1,30 Mg/m³.

Geeignete Polyetherimide werden in der Firmenbroschüre "Ultem" von General Electric Plastic Europe beschrieben. Besonders bevorzugte Werkstoffe sind die unverstärkten Polyetherimide ("Ultem 1000 und 1010"), sowie modifizierte und verstärkte Typen.

Ein weiterer geeigneter hochschmelzender Kunststoff ist ein Polyethersulfon mit folgender wiederholenden Einheit:

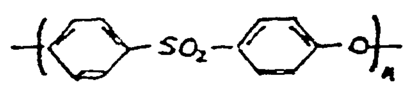

Das vorstehend beschriebene Polyethersulfon ist ein stark gelblich gefärbter, transparenter, thermoplastischer Kunststoff, der vorzugsweise folgende Eigenschaften aufweist:

eine Zugfestigkeit bei 20°C, gemessen nach DIN 53455 von 60 bis 140 N/mm², eine Dehnung bis zum Bruch, gemessen nach ASTM D 638 von 30 bis 90 %, ein Biegemodul bei 20°C,

gemessen nach ASTM D 790 von 2000 bis 6000 $N/mm^2$, eine IZOD-Kerbschlagzähigkeit, gemessen nach ASTM D 256 (6,4 mm Probekörper gekerbt) von 60 bis 100 J/m, einen Erweichungspunkt nach Vicat, gemessen nach ASTM D 1525 von 210 bis 230°C, eine Wärmeformbeständigkeit DTUL, gemessen nach ASTM D 648 von 190 bis 210°C und eine Dichte gemessen nach ASTM D 792 von 1,20 bis 1,50 $Mg/m^3$.

Ein besonders bevorzugter Werkstoff ist ein Polyethersulfon mit folgenden Eigenschaften:

eine Zugefestigkeit von 20°C, gemessen nach DIN 53455 von 70 bis 110 $N/mm^2$, eine Dehnung bis zum Bruch, gemessen nach ASTM D 638 von 40 bis 80 %, einen Biegemodul bei 20°C, gemessen nach ASTM D 790 von 2000 bis 3000 $N/mm^2$, eine IZOD-Kerbschlagzähigkeit, gemessen nach ASTM D 256 (6,4 mm Probekörper gekerbt) von 70 bis 90 J/m, einen Erweichungspunkt nach Vikat gemessen nach ASTM D 1525 von 220 bis 330°C, eine Wärmeformbeständigkeit DTUL, gemessen nach ASTM D 648 von 200 bis 210°C und eine Dichte gemessen nach ASTM D 792 von 1,30 bis 1,40 $Mg/m^3$.

Geeignete Polyethersulfone sind beispielsweise "Victrex" von ICI. Besonders bevorzugte Werkstoffe sind die unverstärkten Typen Victrex 200 P und 300 P sowie modifizierte und verstärkte Typen.

Der hochschmelzende Kunststoff kann durch Glas-, Kohlenstoff-, Armidfasern oder Glaskugeln verstärkt sein, jedoch ist der Kunststoff vorzugsweise nicht verstärkt.

Das für das Wirbelsinterbad verwendete Kunststoffpulver hat zweckmäßigerweise eine Schmelztemperatur im Bereich von 90 bis 210°C, vorzugsweise 110 bis 190°C. Geeignete Kunststoffe sind Polyamide, verseiftes Ethylen-Vinylacetat-Copolymer (Ethylen-Vinylalkohol-Copolymer), Polyetherblockamide und Epoxide. Bei den Polyetherblockamiden sind vor allem folgende Typen im Einsatz: (PEBA) Pebax (Warenzeichen) Nr. 5533 SN 00, 4033 SN 00, 3533 SN 00, 5533 SN 70, 4033 SN 70, 5533 SD 00, 4033 SD 00, 3533 SD 00, 5512 MN 00, 5562 MN 00, 4011 RN 00, 2533 SD 00 der Firma Atochem. Geeignete Ethylen-Vinylalkohol-Copolymere sind unter der Bezeichnung "Levasint", geeignete Polyamidtypen unter dem Warenzeichen "Orgasol" im Handel.

Die Dicke des Kunststoffpulver-Überzugs beträgt zweckmäßigerweise 20 bis 500 µm, vorzugsweise 100 bis 300 µm. Sofern der Überzug eingefärbt werden soll, kann das Kunststoffpulver Farbpigmente enthalten.

Der mit dem Kunststoff überzogene Gegenstand wird dadurch erhalten, daß man

a) einen Gegenstand aus hochschmelzendem Kunststoff auf eine Temperatur vorerwärmt, die zum Aufschmelzen von Kunststoffpulver auf den Gegenstand ausreichend ist,

b) den vorgewärmten Gegenstand in ein Wirbelsinterbad aus Kunststoffpulver taucht und dort eine bestimmte Zeitspanne hält, bis ein Kunststoffilm mit einer gewünschten Dicke aufgeschmolzen ist und

c) den überzogenen Gegenstand aus dem Wirbelsinterbad entfernt und abkühlen läßt. Dieser Vorgang kann mehrmals wiederholt werden.

Die Vorwärmtemperatur und die Eintauchzeit werden zweckmäßigerweise in Abhängigkeit von der Schmelz- bzw. der Erweichungstemperatur des hochschmelzenden Kunststoffs, der Dicke des zu überziehenden Gegenstandes und der Schmelztemperatur des Kunststoffpulvers ausgewählt. Die gewünschte Temperatur des Gegenstandes wird dadurch erreicht, daß man den Gegenstand etwa 10 Sek. bis 15 Min., vorzugsweise 0,5 bis 2 Min. lang vorwärmt. Der aus dem Wirbelsinterbad entfernte Gegenstand wird relativ rasch abgekühlt, vorzugsweise innerhalb von 30 bis 360 Sek., um eine gute Oberflächenglätte zu gewährleisten. Ferner kann der Gegenstand nach der Abkühlung nochmals auf die Schmelztemperatur des Kunststoffpulvers gebracht werden. Diese nochmalige Erwärmung nennt man "Nachglätten".

Wenn eine Brillenfassung oder ein Teil davon aus Polyetherimid oder Polyethersulfon mit einem Überzug aus Ethylen-Vinylalkohol-Copolymer, Polyamid, Epoxid oder Polyetherblockamid durch Wirbelsintern versehen werden soll, wird die Brillenfassung oder das Teil davon auf einen Temperaturbereich von 170 bis 230°C vorgewärmt und die vorgewärmte Brillenfassung bzw. das vorgewärmte Teil 1 bis 5 Sek. lang in das Wirbelsinterbad eingetaucht.

Die Tauchbehandlung kann gegebenenfalls mehrmals wiederholt werden, um eine gewünschte Schichtdicke aufzubringen.

Die Erfindung wird nachstehend unter Bezugnahme auf die Beispiele mehr erläutert.

Beispiel 1

Es wurde ein Brillenbügel aus Polyetherimid (Ultem 1000, 1010 geliefert von der Firma General Electric) im Spritzguß bei etwa 400°C hergestellt. Die Wandstärke des Bügels war etwas stärker dimensioniert als diejenige eines entsprechenden Metallbügels. Der Bügel wurde etwa 2 Min. lang auf eine Temperatur von 210°C vorgewärmt. Der vorgewärmte Brillenbügel wurde dann in ein Wirbelsinterbad getaucht, das ein Polyamid als Kunststoffpulver enthielt. Nach einer Eintauchzeit von 3 Sek. wurde der Bügel wieder herausgezogen und begutachtet. Dabei stellte man fest, daß der Bügel mit einer vollständig glatten und gleichmäßigen Schicht aus Polyamid von etwa 100 µm überzogen war. Der Überzug zeigte gute Abriebfestigkeit und Hautverträglichkeit.

## Beispiel 2

Die Verfahrensweise von Beispiel 1 wurde wiederholt, außer daß ein Brillenbügel aus Polyethersulfon (Victrex 200 P, geliefert von ICI) verwendet wurde. Die Vorwärmtemperatur des Brillenbügels betrug 200°C und die Eintauchzeit betrug 5 Sek. Es wurde ein Überzug mit einer Schichtdicke von etwa 150 µm erhalten. Auch in diesem Falle wurden einwandfrei beschichtete Brillenbügel mit gleichmäßiger Überzugsdicke erreicht.

## Beispiel 3

Die Verfahrensweise von Beispiel 1 wurde wiederholt, außer das als Kunststoffpulver das Polyetherblockamid (Pebax) der Firma ATO eingesetzt wurde. Die Vorwärmtemperatur des Brillenbügels betrug 210°C, die Eintauchzeit betrug 2 Sek. Es wurde ein Überzug mit einer Dicke von etwa 60 µm erhalten. Der aufgeschmolzene Überzug war vollständig gleichmäßig und optisch einwandfrei.

Beispiel 4

Das Beispiel 1 wurde wiederholt, außer daß das Kunststoffpulver ein Farbpigment enthielt. Nach Durchführung des Wirbelsinterverfahrens wurde ein gleichmäßiger Überzug mit gewünschtem Farbton auf dem Brillenbügel erhalten.

Es wird ein mit Kunststoff überzogener Gegenstand beschrieben, wobei der Gegenstand aus hochschmelzendem Kunststoff besteht, auf den ein Überzug aus Kunststoffpulver aufgeschmolzen ist.

**TIEDTKE - BÜHLING - KINNE - GRUPE
PELLMANN - GRAMS - STRUIF**

Patentanwälte und
Vertreter beim EPA
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams
Dipl.-Chem. Dr. B. Struif

Bavariaring 4, Postfach 20240
8000 München 2
Tel.: 089-539653
Telex: 5-24 845 tipat
Telecopier: 0 89-537377
cable: Germaniapatent München



Patentansprüche

1. Mit Kunststoff überzogener Gegenstand, dadurch gekennzeichnet, daß der Gegenstand aus hochschmelzendem Kunststoff besteht, auf den ein Überzug aus Kunststoffpulver aufgeschmolzen ist.

2. Gegenstand nach Anspruch 1, dadurch gekennzeichnet, daß der Gegenstand eine Brillenfassung oder ein Teil davon ist.

3. Gegenstand nach Anspruch 1 oder 2, dadurch gekennzeichnet, das der hochschmelzende Kunststoff eine Schmelz- bzw. Erweichungstemperatur von mindestens 150°C hat.

4. Gegenstand nach einem der vorhergehenden Ansprüche, dadurch gekennzeichnet, daß der hochschmelzende Kunststoff eine Schmelz- bzw. Erweichungstemperatur von mindestens 170°C hat.

5. Gegenstand nach einem der vorhergehenden Ansprüche, dadurch gekennzeichnet, daß der hochschmelzende Kunststoff eine Schmelz- bzw. Erweichungstemperatur von 150 bis 240, vorzugsweise 170 bis 230°C hat.

6. Gegenstand nach einem der vorhergehenden Ansprüche, dadurch gekennzeichnet, daß der hochschmelzende Kunststoff ein Polyetherimid, Polyethersulfon, Polysulfon, Polyphenylensulfid, Polyphenylenoxid, Polyimid, Polyamidimid, Polyarylsulfon, Polyetheretherketon, Polyamid, Polyester, Epoxid oder Polyurethan ist.

7. Gegenstand nach einem der vorhergehenden Ansprüche, dadurch gekennzeichnet, daß das Polyetherimid folgende wiederholende Einheit aufweist:

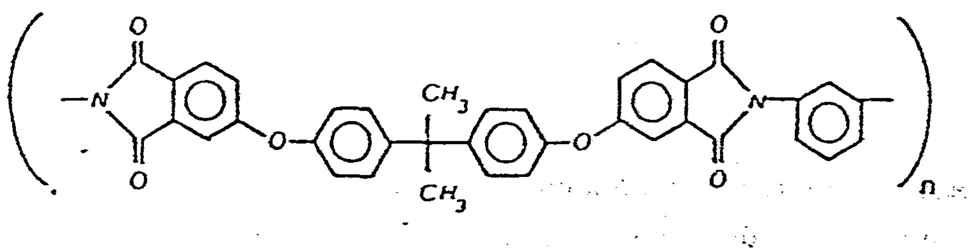

8. Gegenstand nach einem der vorhergehenden Ansprüche, dadurch gekennzeichnet, daß das Polyetherimid folgende Eigenschaften hat:

eine Zugfestigkeit gemessen nach DIN 53455 von 90 bis 140 $N/mm^2$, eine Dehnung bis zum Bruch, gemessen nach DIN 53455 von 40 bis 80 %, einen Biegemodul, gemessen nach DIN 53457 von 2500 bis 5000 $N/mm^2$, eine IZOD Kerbschlagzähigkeit, gemessen nach ASTM D 256 von 30 bis 90 J/m, eine Glastemperatur von 210 bis 230°C, eine Wärmeformbeständigkeit DTUL, gemessen nach ASTM D 648 von 190 bis 210°C und eine Dichte, gemessen nach DIN 53479 von 1,10 bis 1,50 $Mg/m^3$.

9. Gegenstand nach einem der vorhergehenden Ansprüche, dadurch gekennzeichnet, daß das Polyethersulfon folgende wiederholende Einheit aufweist:

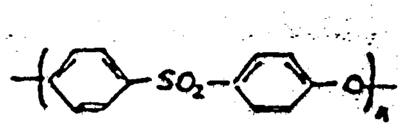

10. Gegenstand nach Anspruch 9, dadurch gekennzeichnet, daß das Polyethersulfon folgende Eigenschaften hat: eine Zugfestigkeit bei 20°C, gemessen nach DIN 53455 von 60 bis 140 $N/mm^2$, eine Dehnung bis zum Bruch, gemessen nach ASTM D 638 von 30 bis 90 %, ein Biegemodul bei 20°C, gemessen nach ASTM D 790 von 2000 bis 6000 $N/mm^2$, eine IZOD-Kerbschlagzähigkeit, gemessen nach ASTM D 256 (6,4 mm Probekörper gekerbt) von 60 bis 100 J/m, einen Erweichungspunkt nach Vicat, gemessen nach ASTM D 1525 von 210 bis 230°C, eine Wärmeformbeständigkeit DTUL, gemessen nach ASTM D 648 von 190 bis 210°C und eine Dichte gemessen nach ASTM D 792 von 1,20 bis 1,50 $Mg/m^3$.

11. Gegenstand nach einem der vorhergehenden Ansprüche, dadurch gekennzeichnet, daß der hochschmelzende Kunststoff durch Glas-, Kohlenstoff-, Aramidfasern oder durch Glaskugeln verstärkt ist.

12. Gegenstand nach einem der vorhergehenden Ansprüche, dadurch gekennzeichnet, daß das Kunststoffpulver eine Schmelztemperatur im Bereich von 90 bis 210°C hat.

13. Gegenstand nach einem der vorhergehenden Ansprüche, dadurch gekennzeichnet, daß das Kunststoffpulver eine Schmelztemperatur im Bereich von 110 bis 190°C hat.

14. Gegenstand nach einem der vorhergehenden Ansprüche, dadurch gekennzeichnet, daß das Kunststoffpulver ein Polyamid, ein Ethylen-Vinylalkohol-Copolymer, ein Polyetherblockamid oder ein Epoxid ist.

15. Gegenstand nach einem der vorhergehenden Ansprüche, dadurch gekennzeichnet, daß das Kunststoffpulver Farbpigmente enthält.

16. Verfahren zum Beschichten von Gegenständen aus Kunststoff, dadurch gekennzeichnet, daß man die Gegenstände, die aus einem hochschmelzenden Kunststoff bestehen, durch Wirbelsintern beschichtet.

17. Verfahren nach Anspruch 16, dadurch gekennzeichnet, daß man

a) den Gegenstand auf eine Temperatur vorwärmt, die zum Aufschmelzen von Kunststoffpulver auf den Gegenstand ausreichend ist,

b) den vorgewärmten Gegenstand in ein Wirbelsinterbad aus Kunststoffpulver taucht und dort eine bestimmte Zeitspanne hält, bis ein Film mit einer gewünschten Dicke aufgeschmolzen ist und

c) den überzogenen Gegenstand aus dem Wirbelsinterbad entfernt und abkühlen läßt.

18. Verfahren nach Anspruch 16 oder 17 dadurch gekennzeichnet, daß man die Vorwärmtemperatur und die Eintauchzeit in Abhängigkeit von der Schmelz- bzw. Erweichungstemperatur des hochschmelzenden Kunststoffs, der Dicke des zu überziehenden Gegenstandes und der Schmelztemperatur des Kunststoffpulvers auswählt.

19. Verfahren nach einem der Ansprüche 16 bis 18, dadurch gekennzeichnet, daß man als Gegenstand eine Brillenfassung oder ein Brillenteil beschichtet.

20. Verfahren nach einem der Ansprüche 16 bis 19, dadurch gekennzeichnet, daß man als hochschmelzenden Kunststoff ein Polyetherimid, Polyethersulfon, Polysulfon, Polyphenylensulfid, Polyphenylenoxid, Polyimid, Polyamidimid, Polyarylsulfon, Polyetheretherketon, Polyamid, Polyester, Epoxid oder Polyurethan verwendet.

21. Verfahren nach einem der Ansprüche 16 bis 20, dadurch gekennzeichnet, daß man als Kunststoffpulver ein Polyamid, Ethylen-Vinylalkohol-Copolymer, ein Polyetherblockamid oder ein Epoxid verwendet.

22. Verfahren nach einem der Ansprüche 16 bis 21, dadurch gekennzeichnet, daß der Gegenstand 10 Sekunden bis 15 Minuten, vorzugsweise 0,5 bis 2 Minuten vorgewärmt wird.

23. Verfahren nach einem der Ansprüche 16 bis 22, dadurch gekennzeichnet, daß man nach der Wirbelsinterbehandlung den Gegenstand innerhalb von 30 bis 360 Sek. auf Raumtemperatur abkühlt.

24. Verfahren nach Anspruch 23, dadurch gekennzeichnet, daß man den Gegenstand nach dem Abkühlen wieder auf die Schmelztemperatur des Kunststoffpulvers bringt.

25. Verfahren nach einem der Ansprüche 16 bis 24, dadurch gekennzeichnet, daß man eine Brillenfassung oder ein Teil davon aus Polyetherimid oder Polyethersulfon auf eine Temperatur im Bereich von 170 bis 230 °C vorwärmt und die vorgewärmte Brillenfassung bzw. das vorgewärmte Teil 1 bis 5 Sek. lang in ein Wirbelsinterbad aus Ethylen-Vinylalkohol-Copolymer, Polyetherblockamid, Epoxid, Polyamid oder Mischungen davon eintaucht.